# EUROPEAN PATENT APPLICATION

(11) **EP 3 715 012 A1**
(43) Date of publication of application: **30.09.2020**
(21) Application number: 18880768.9
(22) Date of filing: 17.05.2018
(51) Int. Cl.: B22D 11/10, B22D 41/54

(54) **NOZZLE FOR CONTINUOUS CASTING**

(30) Priority: 24.11.2017 JP 2017225366
(71) Applicant: Akechi Ceramics Co., Ltd., Ena-shi, Gifu 5097795 (JP)
(72) Inventor: SHINATO Masahiro, Ena-shi Gifu 509-7795 (JP); KAWASE Masanari, Ena-shi Gifu 509-7795 (JP)
(74) Representative: Cabinet Beau de Loménie
(86) International application number: PCT/JP2018/019070
(87) International publication number: WO 2019/102634

(57) **Abstract**

A continuous casting nozzle 1 includes a nozzle main body 2 and a nozzle hole 3 formed to extend through the nozzle main body so that molten steel flows therethrough, and an alumina-hardly-adherable refractory 5 containing components of MgO, CaO and SiO₂ is disposed on an inner surface defining the nozzle hole. Consequently, even when a temperature of the nozzle is low, adhesion of inclusions in molten steel to a portion in contact with the molten steel can be reduced, with the result that the nozzle hole can be prevented from being blocked and the continuous casting nozzle can contribute to an improvement in the steel quality.

## Description

### Technical Field

The present invention relates to a continuous casting nozzle used for continuous casting, such as an immersion nozzle, a long nozzle and a tundish upper nozzle for injecting molten steel from a tundish into a mold. More specifically, the present invention relates to a continuous casting nozzle which can contribute to prevention of inclusion adhesion and improvement in the steel quality by arranging a material reacting with inclusions present in molten steel on an inner hole surface.

### Background Art

In casting a steel slab, alumina inclusions in molten steel repeatedly adhere to, coalesce on and drop from an inner hole surface of a continuous casting nozzle to be taken into the steel slab together with the molten steel flow, resulting in a steel slab defect which degrades the quality of the steel slab. Furthermore, the alumina inclusions may adhere to the inner hole surface of the continuous casting nozzle, causing narrowing of the inner hole and subsequent blockage. In particular, the adhesion of the alumina inclusions to the inner hole surface of the nozzle is remarkable in continuous casting of aluminum killed steel.

The applicant of this application previously proposed, as a method for overcoming the problem, a continuous casting nozzle using a refractory composed mainly of alumina and pagodite as a refractory configuring the continuous casting nozzle and a refractory configuring the inner hole surface.

However, this continuous casting nozzle has a problem that an inclusion adhesion reducing performance is not sufficiently exerted when a temperature of the nozzle decreases until molten steel flows through the nozzle hole from the time of completion of preheating.

### Prior Art Document

### Patent Documents

Patent Document 1: Japanese Patent No. 3101650

### Summary of the Invention

### Problem to Be Overcome by the Invention

Accordingly, an object of the present invention is to provide a continuous casting nozzle which can reduce adhesion of inclusions in molten steel to a portion thereof in contact with the molten steel thereby to prevent the nozzle hole from being blocked even when the temperature of the nozzle is low, and which can contribute to an improvement in the quality of steel.

### Means for Overcoming the Problem

A solution to overcome the aforementioned problem is a continuous casting nozzle including a nozzle main body and a nozzle hole formed to extend through the nozzle main body so that molten steel flows therethrough, wherein an alumina-hardly-adherable refractory containing components of MgO, CaO and SiO₂ is disposed on an inner surface defining the nozzle hole.

### Effect of the Invention

According to the continuous casting nozzle as claimed in claim 1, adhesion of inclusions in the molten steel to the portion in contact with the molten steel can be reduced even when the nozzle temperature is low, with the result that the nozzle hole can be prevented from being blocked and the continuous casting nozzle can contribute to an improvement in the quality of steel.

According to the continuous casting nozzle as claimed in claim 2, the continuous casting nozzle can be configured to have a higher thermal spalling resistance.

According to the continuous casting nozzle as claimed in claim 3, the aforementioned effect of claim 1 can be achieved more satisfactorily.

According to the continuous casting nozzle as claimed in claim 4, the aforementioned effect of claim 1 can be achieved more satisfactorily.

According to the continuous casting nozzle as claimed in claim 5, the aforementioned effect of claim 1 can be achieved more satisfactorily.

According to the continuous casting nozzle as claimed in claim 6, the aforementioned effect of claim 1 can be achieved more satisfactorily.

According to the immersion nozzle as claimed in claim 7, even when the temperature of the nozzle is low, adhesion of the inclusions in molten steel to the portion in contact with the molten steel can be reduced, with the result that the immersion nozzle can prevent the nozzle hole from being closed and contribute to an improvement in the steel quality.

### Brief Description of the Drawings

FIG. 1 is a longitudinal sectional view of the continuous casting nozzle of an embodiment in accordance with the present invention;
FIG. 2 is an explanatory diagram of a test method for showing the function and effect of the continuous casting nozzle in accordance with the present invention; and
FIG. 3 is an explanatory illustration of experimental results obtained by the test method of FIG. 2.

### Best Mode for Carrying Out the Invention

In the present invention, since an alumina-hardly-adherable refractory 5 containing components of MgO, CaO and SiO₂ is disposed on an inner surface 4 of a nozzle hole 3, the alumina contained in the molten steel reacts with the alumina-hardly-adherable refractory 5 to form a molten layer (liquid phase at a temperature equal to or below the molten steel temperature, with the result that the invention realizes the continuous casting nozzle 1 which can reduce adhesion of inclusions in molten steel to the portion thereof in contact with the molten steel thereby to prevent the nozzle hole from being closed even when the temperature of the nozzle is low, and which can contribute to an improvement in the steel quality.

### Embodiment 1

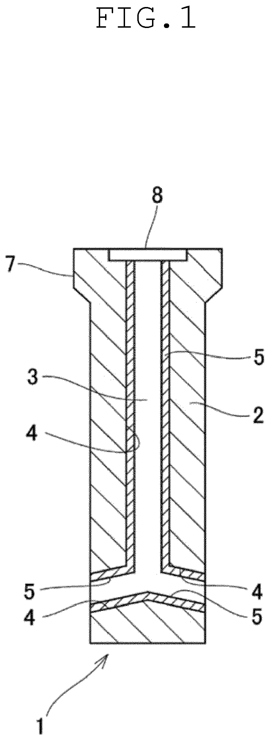

The continuous-casting nozzle in accordance with the present invention will be described with reference to an embodiment shown in the drawings. As shown in FIG. 1, a continuous casting nozzle 1 of this embodiment has a nozzle main body 2 and a nozzle hole 3 formed through the nozzle main body 2 for flowing molten steel. The nozzle hole 3 has an inner surface 4 on which an alumina-hardly-adherable refractory 5 containing components of MgO, CaO and SiO₂ is disposed. The configuration of each component of the continuous casting nozzle 1 will be described in detail below.

The continuous casting nozzle 1 is an immersion nozzle which is disposed between a tundish and a mold and used when molten steel is poured from the tundish into the mold. The nozzle hole 3 through which the molten steel flows has a surface layer portion formed by the alumina-hardly-adherable refractory 5, whereas the nozzle main body 2 is made of a conventional alumina-black lead refractory.

The nozzle main body 2 is substantially cylindrical in shape and has a neck portion 7 whose diameter is increased upward and which is formed integrally at an upper portion thereof. A nozzle hole 3 through which molten steel flows is formed in the center of the nozzle main body 2 so as to penetrate downward from an upper end of the nozzle main body 2. The nozzle hole 3 communicates with an upper end opening 8 and communicates, in a lower part, with discharge ports 6a and 6b provided so as to be opposed to each other in a horizontal direction.

Regarding dimensions of the continuous casting nozzle 1, for example, the continuous casting nozzle 1 has a total length of about 6 cm, a diameter of the nozzle hole 3 of 16 cm, a diameter of the nozzle main body 2 of 16 cm and a thickness of about 5 cm. Note that the dimensions are examples and should not accordingly limit the invention but may be appropriately changed in design depending on dimensions of a cast piece and the like. The alumina-hardly-adherable refractory 5 has a thickness ranging from 5 to 10 mm. The reason for this is that if the thickness is less than 5 m, the alumina-hardly-to-adhering performance is not sustainable, and if the thickness exceeds 10 mm, the alumina-hardly-adherable refractory 5 may break.

The alumina-hardly-adherable refractory 5 disposed on the inner surface 4 of the nozzle hole 3 is made of components of MgO (magnesia), CaO (calcia) and SiO₂ (silicon oxide) as raw materials, which are kneaded, molded and heat treated with C (graphite) being preferably blended.

In the present invention, since the alumina-hardly-adherable refractory 5 containing MgO, CaO and SiO₂ is disposed on the inner hole surface 4 of the nozzle hole 3, the alumina reacts with the alumina-hardly-adherable refractory 5 at a molten steel temperature of 1300°C or higher thereby to form a molten layer (liquid phase at a temperature lower than the molten steel temperature) composed of CaO-Al₂O₃-SiO₂, so that adhesion of inclusions in the molten steel to a portion of the nozzle 1 in contact with the molten steel can be reduced with the result that the nozzle hole can be prevented from being clogged and the deposits on the inner hole from being taken into the steel and degrading the quality of the steel.

The raw materials of the alumina-hardly-adherable refractory 5 are preferably blended in ranges of 30≤MgO≤80% by weight, 5≤CaO≤30% by weight, 5≤SiO₂≤40% by weight and 0≤C≤40% by weight.

When the aggregate is heavy, a melting alumina-hardly-adherable refractory reacting with aluminum oxide or alumina (Al₂O₃) in molten steel may be trapped in the slab, but magnesium oxide or magnesia (MgO) is lighter than zirconium oxide or zirconia (ZrO₂), so Mgo has an effect of reducing the possibility of the alumina-hardly-adherable refractory being trapped in the slab.

The MgO content is preferably 30≤MgO≤80% by weight. When the MgO content is less than 30% by weight, the minimum strength of the alumina-hardly-adherable refractory 5 cannot be maintained as an aggregate. When the MgO content exceeds 80% by weight, the thermal spalling resistance is low and cracking due to heat shock will occur.

Since CaO reacts with Al₂O₃ at around 1300°C or above, CaO functions as a reaction material with Al₂O₃ in molten steel. The content of CaO is preferably 5≤CaO≤30% by weight. When the content of CaO is less than 5% by weight, the content is so small that the reaction with Al₂O₃ becomes insufficient, and when the content of CaO exceeds 30% by weight, the material strength is insufficient and the product structure is insufficient in strength, and the reaction is excessive with the result that CaO flows too quickly with the molten steel.

SiO₂ functions as a reaction material with Al₂O₃ in the molten steel since SiO₂ also reacts with Al₂O₃ at around 1300°C or above. The content of SiO₂ is preferably 5≤SiO₂≤40% by weight. When the content of SiO₂ is less than 5% by weight, the content is so small that the reaction with Al₂O₃ becomes insufficient. When the content of SiO₂ exceeds 40% by weight, SiO₂ reacts excessively and flows too quickly with the molten steel in addition to insufficient material strength and insufficient product structure strength. In the present invention, it is important to blend both the CaO₂ component and the SiO₂ component. The reason for this is that the presence of CaO-SiO₂ in the alumina-hardly-adherable refractory 5 can reduce the adhesion of inclusions by the melting of CaO-SiO₂. In the present invention, furthermore, it is preferable that each component is individually blended separately. This has a purpose that a required amount of each component is reliably contained in the alumina-hardly-adherable refractory 5. However, with respect to CaO and SiO₂, the scope of the present invention encompasses alumina-hardly-adherable refractories blended by using a CaO-SiO₂ mixture.

C (graphite) is preferably blended as a raw material for the alumina-hardly-adherable refractory material 5 since C (graphite) can improve the thermal spalling resistance or dissolution resistance.

C does not function as a reaction material with Al₂O₃ in the molten steel and is not an essential blending raw material since MgO is contained, and C is preferably contained in a range of 0≤C≤40% by weight. Considering the thermal spalling resistance, it is preferable that C is blended even by a small amount. When the amount of C exceeds 40% by weight, wear loss due to the molten steel flow increases as well as the product becomes insufficient in strength. This is not preferable.

In order that the alumina-hardly-adherable refractory 5 may be formed, a thermosetting resin such as phenol resin or furan resin is added as a binder to the materials, and the resultant is molded into a nozzle shape and then fired. This forming method is preferable in that CIP uniformly compresses the formed body. A firing temperature preferably ranges from about 1000 to 1300°C. Furthermore, a reducing atmosphere, that is, a non-oxidizing atmosphere is preferable as a firing atmosphere rather than an oxidizing atmosphere.

A method of arranging the alumina-hardly-adherable refractory 5 on the inner surface 3a of the inner hole 3 may include a method of integrally forming the nozzle main body 2 integrally with the molding of the nozzle main body 2, or a method of coating or casting the inner surface of the nozzle inner hole 3 after only the nozzle main body 2 has been molded, or a method in which the alumina-hardly-adherable refractory 5 is molded and fired separately and placed on the nozzle main body 2 with mortar or the like being interposed therebetween.

### (Material quality evaluation test of alumina-hardly-adherable refractory)

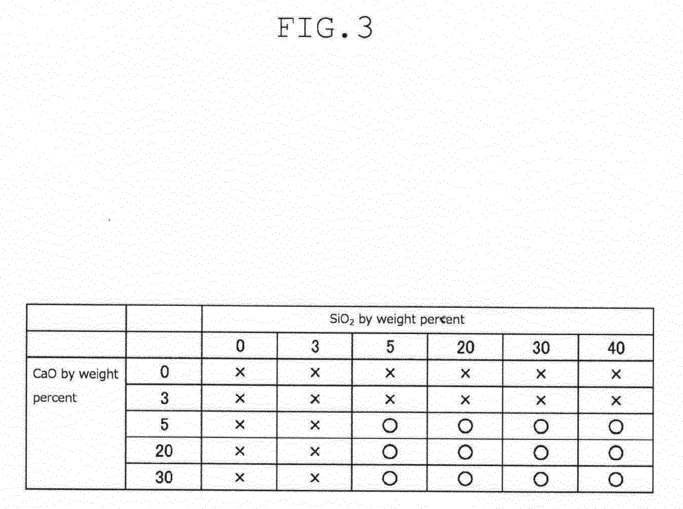

Disk-shaped molded bodies were prepared from the composition obtained by adding powder and solution of phenolic resin in the range of 5 to 10% by weight to 30 types of mixtures with different component compositions (mixtures with CaO and SiO₂ of 0 to 30% by weight and the balance MgO), as shown in FIG. 3.

The obtained molded bodies were respectively reduced and fired at a temperature in a range of 1000°C to 1200°C to produce disk-shaped refractories B.

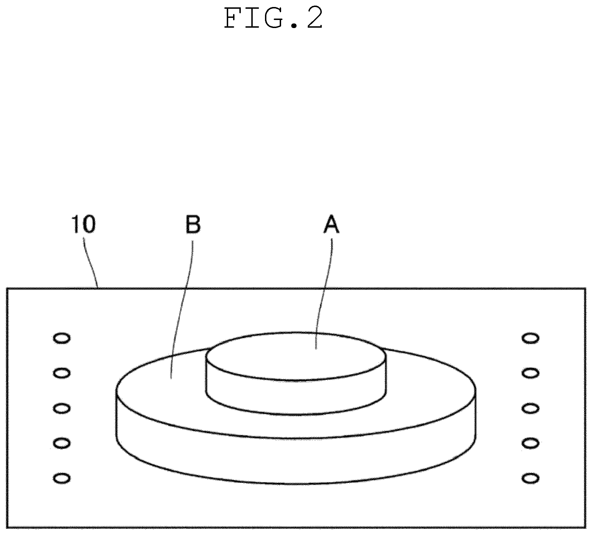

As shown in FIG. 2, disc-shaped alumina (Al₂O₃) A was placed on each of 30 types of disc-shaped refractories B for heat treatment at 1500°C for 2 hours under a reducing atmosphere with argon in an electric furnace 10, so that a reactivity test with alumina (Al₂O₃) was performed.

### (Test result)

When reaction layers between alumina (Al₂O₃) A and the refractories B were analyzed by an electron beam microanalyzer (EPMA), molten layers each having a composition of CaO-Al₂O₃-SiO₂ were respectively confirmed on 12 types of refractories (CaO) each containing the refractory (CaO) of 5 to 30% by weight and SiO₂ of 5 to 40% by weight as shown in FIG. 3.

Furthermore, when a test similar to the above was conducted as a comparison test between refractories made with the aggregate of MgO (molten) being replaced by ZrO₂ (molten) or Al₂O₃ (molten) and MgO (molten) based refractories, molten layers each having the composition of
CaO-Al₂O₃-SiO₂ were also confirmed on the MgO (molten) refractories.

### Explanation of Reference Symbols

- 1: continuous casting nozzle
- 2: nozzle main body
- 3: nozzle hole
- 4: inner surface
- 5: alumina-hardly-adherable refractory
- 6: discharge port
- 7: neck portion
- 8: upper end opening

## Claims

1. A continuous casting nozzle comprising a nozzle main body and a nozzle hole formed to extend through the nozzle main body so that molten steel flows therethrough, wherein an alumina-hardly-adherable refractory containing components of MgO, CaO and SiO₂ is disposed on an inner surface defining the nozzle hole.

2. The continuous casting nozzle according to claim 1, wherein the alumina-hardly-adherable refractory contains a C component in a range of 1≤C≤40% by weight as a raw material.

3. The continuous casting nozzle according to claim 1, wherein the alumina-hardly-adherable refractory contains an MgO component in a range of 30≤MgO≤80% by weight as a raw material.

4. The continuous casting nozzle according to claim 1, wherein the alumina-hardly-adherable refractory contains a CaO component in a range of 5≤CaO≤30% by weight as a raw material.

5. The continuous casting nozzle according to claim 1, wherein the alumina-hardly-adherable refractory contains an SiO₂ component in a range of 5≤SiO₂≤40% by weight as a raw material.

6. The continuous casting nozzle according to claim 1, wherein the alumina-hardly-adherable refractory has a thickness ranging from 5 to 10 mm.

7. The continuous casting nozzle according to claim 1, which is an immersion nozzle.
